# EUROPÄISCHE PATENTSCHRIFT

(11) **EP 2 584 237 B1**
(45) Veröffentlichungstag und Bekanntmachung des Hinweises auf die Patenterteilung: **03.12.2014**
(21) Anmeldenummer: 12186991.1
(22) Anmeldetag: 02.10.2012
(51) Int. Cl.: F16L 7/00, F23J 13/04, E04F 17/02

(54) **Vorrichtung zum Festlegen einer Rohreinheit**
Device for fixing a tube unit
Dispositif de fixation d'une unité de tuyau

(30) Priorität: 19.10.2011 DE 102011054617; 08.08.2012 DE 202012102981 U
(43) Veröffentlichungstag der Anmeldung: 24.04.2013
(60) Teilanmeldung: 14163890.8
(73) Patentinhaber: Bächle, Dieter, 8597 Landschlacht (CH)
(72) Erfinder: Bächle, Dieter, 8597 Landschlacht (CH)
(74) Vertreter: Wagner, Kilian

(56) Entgegenhaltungen:
- EP-A2- 0 837 282
- DE-A1- 10 340 903
- DE-C1- 10 205 989
- DE-U1- 20 003 980
- DE-U1-202006 015 501
- DE-U1-202007 017 476
- US-A1- 2002 195 818

## Beschreibung

Die Erfindung betrifft eine Vorrichtung zum Festlegen einer Rohreinheit, insbesondere in einer Heizungsanlage in einem Wohngebäude, nach dem Oberbegriff des Anspruchs 1.

Eine derartige Vorrichtung ist aus der DE 200 03 980 U1 bekannt. Die bekannte Vorrichtung weist ein manschettenartiges Element auf, an dessen beiden Endbereichen jeweils ein Teil einer Spanneinrichtung befestigt bzw. angeordnet ist. Die Spanneinrichtung ist in Form einer Klemmschnallenverbindung ausgebildet, die ein an dem einen Ende des manschettenartigen Elements angeordnetes, hakenförmiges Teil aufweist, das mit einem Drahtbügel zusammenwirkt, der mit einem Klemmhebel spannbar ist. Mittels der bekannten Spanneinrichtung lässt sich durch Umlegen des Spannhebels die benötigte Spannkraft erzeugen. Die bekannte Spanneinrichtung arbeitet jedoch nur dann zufriedenstellend, wenn die mit der Spanneinrichtung verbundenen Rohre innerhalb eines vorgegebenen Durchmesserbereichs liegen. Weisen die Rohre einen zu kleinen Durchmesser auf, kann mittels der bekannten, als Klemmschnallenverbindung ausgebildeten Spanneinrichtung die benötigte Klemmkraft nicht erzeugt werden, während bei zu großen Rohrdurchmessern die benötigte Betätigungskraft relativ hoch ist bzw. diese Kraft zu einer Beschädigung oder Deformation der Spanneinrichtung führen kann.

Auch die EP 0 837 282 A2 und die DE 102 05 989 C1 zeigen jeweils Vorrichtungen zum Befestigen einer Rohreinheit nach dem Oberbegriff des Anspruchs 1, die jeweils eine werkzeuglos betätigbare Spanneinrichtung in Form einer Klemmschnallenverbindung aufweisen. Die eingangs beschriebene Problematik der problemlosen Handhabung hinsichtlich der aufzubringenden Klemmkräfte sowie der benötigten Betätigungskräfte ist jedoch auch bei diesen Klemmschnallenverbindungen gegeben.

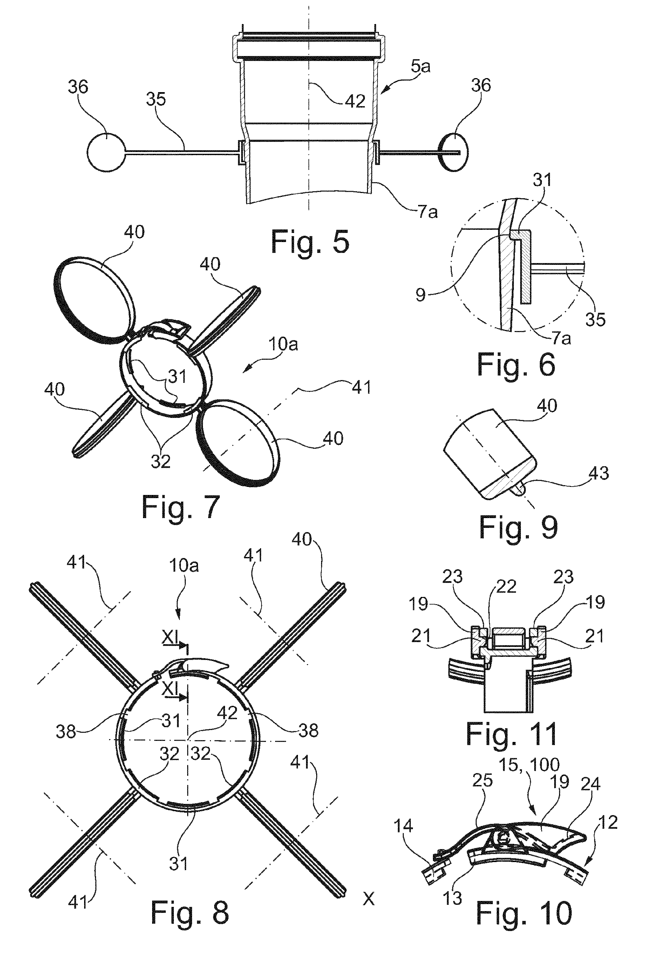

Aus der DE 20 2007 017 476 U1 des Anmelders ist eine weitere Vorrichtung bekannt. Sie dient insbesondere in Wohnbauten dazu, Rohre, die zur Ausleitung von Abgasen von Heizungsanlagen dienen, innerhalb eines Schachtes zu führen. Dabei soll die in der Praxis aus mehreren Rohrelementen zusammengesetzte Rohreinheit mit Abstand zu der Wand des Schachtes angeordnet sein. Dies erfolgt zum einen, um eine optimale Kühlung der Rohreinheit zu erzielen, damit diese über den gesamten Umfang in Kontakt mit der Umgebungsluft stehen kann, und zum anderen, damit zwischen dem Abgasrohr und dem Schacht ein ringförmiger Raum ausgebildet wird, über den z.B. die Heizungsanlagen mit Frischluft versorgt werden kann. Aus der genannten Schrift sind bereits verschiedene Ausführungen der Vorrichtung, insbesondere dessen manschettenartigen Elements, bekannt. So ist aus der Fig. 11 der genannten Schrift eine Ausbildung der beiden miteinander zusammenwirkenden Endbereiche des manschettenartigen Elements bekannt, bei der diese eine Rastverbindung ausbilden, indem ein an dem einen Endbereich angeformter Rasthaken in eine entsprechend ausgebildete Aufnahme am anderen Endbereich des manschettenartigen Elements einführbar ist und dort in der Verriegelungsstellung verrastet.

Bei derartigen Vorrichtungen besteht insbesondere die Problematik, dass die Befestigung der Vorrichtung an der Rohreinheit bzw. an den Rohrelementen möglichst einfach erfolgen soll, d.h. mit möglichst wenig Kraftaufwand und derart, dass die Verbindung zwischen der Vorrichtung und der Rohreinheit einfach wieder gelöst werden kann.

Darüber hinaus ist die Zugänglichkeit zu insbesondere den Endbereichen des manschettenartigen Elements oftmals erschwert, insbesondere, wenn die Montage der Vorrichtung innerhalb des Schachtes erfolgen muss. Dadurch ist es für einen Monteur bzw. Bediener oftmals schwer, die beiden Endbereiche des manschettenartigen Elements zu greifen bzw. diese in gewünschter Art und Weise zusammenzuführen (bei einer Ausbildung mit einer Rastverbindung) sowie die zum Ausbilden der Rastverbindung benötigte Kraft in die Endbereiche einzubringen.

In Kenntnis des genannten Stands der Technik hat sich der Erfinder die Aufgabe gestellt, eine Vorrichtung zum Festlegen einer Rohreinheit nach dem Oberbegriff des Anspruchs 1 derart weiterzubilden, dass eine besonders einfache Handhabung der Vorrichtung an der Rohreinheit ermöglicht wird. Unter einer besonders einfachen Handhabung wird dabei ein besonders einfaches Ausbilden einer Verriegelungsstellung der Vorrichtung an der Rohreinheit bzw. ein besonders einfaches Wiederlösen der Vorrichtung von der Rohreinheit, auch unter räumlich erschwerten Bedingungen, verstanden, wobei gleichzeitig mit einer möglichst geringen Betätigungskraft eine hohe Spannkraft erzielt werden soll, die die beiden Endabschnitte des manschettenartigen Elements gegen- bzw. übereinander bewegt, so dass ein sicherer Halt an der Rohreinheit ermöglicht wird.

Diese Aufgabe wird erfindungsgemäß bei einer Vorrichtung zum Festlegen einer Rohreinheit mit den Merkmalen des Anspruchs 1 dadurch gelöst, dass die Spanneinrichtung zum Ausbilden einer Rastverbindung zwischen den Endbereichen des manschettenartigen Elements dient, wobei die Spanneinrichtung ein Betätigungselement umfasst, das in Wirkverbindung mit einer an einem Endbereich des manschettenartigen Elements ausgebildeten ersten Verzahnungsgeometrie zusammenwirkt. Das Betätigungselement dient somit dazu, beispielsweise bei einem Schwenken des Betätigungselements ein Zusammenziehen der beiden Endbereiche zu ermöglichen. Dabei lässt sich durch eine entsprechende Größe bzw. Geometrie des Betätigungselements eine Kraftverstärkung erzielen.

Vorteilhafte Weiterbildungen der erfindungsgemäßen Vorrichtung zum Festlegen einer Rohreinheit sind in den Unteransprüchen aufgeführt.

Ganz besonders bevorzugt ist eine konstruktive Ausgestaltung, bei der das Betätigungselement einen mit der ersten Verzahnungsgeometrie zusammenwirkenden Abschnitt aufweist, der mit der ersten Verzahnungsgeometrie in Art einer Ratsche zusammenwirkt, so dass bei einer Bewegung des Betätigungselements in die eine Richtung sich der Umfang des Elements verringert, und bei einer Bewegung des Betätigungselements in die andere, entgegengesetzte Richtung das Element seinen Umfang beibehält. Dadurch wird ein kontinuierliches Spannen bzw. eine kontinuierliche Umfangsverringerung des manschettenartigen Elements bewirkt, wobei insbesondere beim Zurückschwenken des Betätigungselements ein sich Wiederlösen der Vorrichtung von der Rohreinrichtung sicher vermieden wird.

In einer ersten konstruktiven Ausgestaltung des Betätigungselements ist es vorgesehen, dass diese in Form einer hin- und herschwenkbaren Betätigungsplatte ausgebildet ist. Eine derartige Ausbildung hat den Vorteil, dass sie für einen Bediener gut erkennbar und in ihrer Funktion intuitiv erfassbar und sich somit besonders leicht bedienen lässt. Darüber hinaus kann eine derartige Betätigungsplatte beispielsweise durch eine entsprechende Ausgestaltung besonders gut greifbar bzw. fassbar sein.

Eine mechanisch besonders stabile Ausgestaltung der Vorrichtung bei Verwendung einer Betätigungsplatte wird erzielt, wenn diese im Bereich eines Abstandshalteorgans angeordnet und schwenkbar an diesem befestigt ist.

In alternativer Ausgestaltung zu einer Betätigungsplatte kann es auch vorgesehen sein, dass das Betätigungselement durch ein Abstandshalteorgan selbst ausgebildet ist, das mit dem manschettenartigen Element verbunden ist. In diesem Fall wird durch das Hin- und Herschwenken des Abstandshalteorgans die benötigte Spannkraft auf das manschettenartige Element übertragen, wobei sich mit einer derartigen Ausgestaltung besonders günstige Hebelverhältnisse erzielen lassen, die eine große Verstärkung der manuellen Betätigungskraft ermöglichen.

Zur axialen Festlegung bzw. Fixierung der Rohreinheit an der Vorrichtung wird darüber hinaus eine konstruktive Ausbildung vorgeschlagen, bei der das manschettenartige Element eine radial umlaufende Wand aufweist, und dass von der Wand wenigstens ein radial nach innen ragender Halteabschnitt ausgeht, der in der Verriegelungsstellung der Klemmschnallenverbindung mit der Rohreinheit eine formschlüssige, die Rohreinheit in Axialrichtung festsetzende Verbindung ausbildet.

Ganz besonders bevorzugt ist dabei eine Ausgestaltung, bei der im Bereich beider Stirnseiten des manschettenartigen Elements jeweils mehrere, vorzugsweise in gleichgroßen Winkelabständen zueinander angeordnete, teilsegmentartige Halteabschnitte vorgesehen sind, die jeweils flanschartig ausgebildet sind, und dass die Halteabschnitte an den beiden Stirnseiten radial versetzt zueinander angeordnet sind. Mit einer derartigen Ausbildung lassen sich insbesondere sowohl Rohrabschnitte axial fixieren, die in Art eines Wellrohres ausgebildet sind, als auch Rohrabschnitte, die muffenartig (mit einer Einschnürung) ausgebildet sind.

Um die Rohreinheit insbesondere innerhalb eines Schachtes zentrisch ausrichten zu können, wird darüber hinaus eine Ausgestaltung vorgeschlagen, bei der mehrere, vorzugsweise vier, in gleichmäßigen Winkelabständen zueinander angeordnete, radial abstehende Organe vorgesehen sind, und dass die Organe in Längsrichtung der Vorrichtung betrachtet radial elastisch verformbar ausgebildet sind. Dadurch ist nicht nur eine zentrische Anordnung der Rohreinheit innerhalb des Schachtes möglich, sondern die Vorrichtung passt sich ohne weitere Maßnahmen automatisch unterschiedlichen Öffnungsweiten bzw. Querschnitten des Schachtbereichs an.

In einer bevorzugten Ausgestaltung der abstehenden Organe, die darüber hinaus eine besonders einfache und wirtschaftlich günstige Herstellbarkeit der Vorrichtung ermöglichen, wird vorgeschlagen, dass die abstehenden Organe als Klemmringe ausgebildet sind, deren Längsachsen senkrecht zur Längsachse des manschettenartigen Elements verlaufen, und dass die Klemmringe als separate Bauteile ausgebildet sind, die über eine formschlüssig ausgebildete Rastverbindung mit dem manschettenartigen Element verbunden sind.

Besonders einfach und preiswert lässt sich eine erfindungsgemäße Vorrichtung herstellen, wenn das manschettenartige Element und die Spanneinrichtung vollständig aus Kunststoff bestehen. Insbesondere wird bei einer derartigen vollständigen Ausbildung aus Kunststoff auch eine Korrosion der Vorrichtung, zum Beispiel an Scharnierteilen, zuverlässig vermieden, so dass ein Wiederlösen der Vorrichtung von der Rohreinheit auch nach einem relativ langen Zeitraum, z.B. nach einigen Jahren, problemlos möglich ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine perspektivische Ansicht auf eine Vorrichtung zum Befestigen einer Rohreinheit bei einer ersten, nicht von der Erfindung umfassten Ausführungsform der Erfindung,
- Fig. 2: einen Längsschnitt durch die Vorrichtung gemäß Fig. 1,
- Fig. 3: ein Detail der Vorrichtung gemäß Fig. 2 im Befestigungsbereich der Vorrichtung mit einem Rohrelement,
- Fig. 4: die Vorrichtung gemäß Fig. 1 bei Verwendung an einem gegenüber den Fig. 1 bis 3 modifizierten Rohrelement in perspektivischer Ansicht,
- Fig. 5: einen Längsschnitt durch die Vorrichtung gemäß Fig. 4,
- Fig. 6: ein Detail der Fig. 5 in vergrößerter Darstellung,
- Fig. 7: eine gegenüber den Fig. 1 bis 6 modifizierte Ausführungsform in perspektivischer Ansicht,
- Fig. 8: einen Querschnitt durch die Vorrichtung gemäß Fig. 7,
- Fig. 9: ein Detail der Fig. 8 im Bereich eines Klemmrings in vergrößerter Darstellung,
- Fig. 10: den Bereich der Klemmschnallenverbindung in Seitenansicht,
- Fig. 11: einen Schnitt in der Ebene XI - XI der Fig. 8,
- Fig. 12: eine perspektivische Ansicht auf eine gegenüber Fig. 1 alternative und erfindungsgemäße Vorrichtung zum Befestigen einer Rohreinheit,
- Fig. 13: eine perspektivische Teilansicht einer mit einer Betätigungsplatte ausgestatteten Spanneinrichtung, wie sie bei der Vorrichtung gemäß Fig. 12 verwendet wird,
- Fig. 14: einen Schnitt durch Vorrichtung gemäß Fig. 12 im Bereich der Betätigungsplatte,
- Fig. 15: ein Detail der Fig. 14 in vergrößerter Darstellung,
- Fig. 16: eine perspektivische Teilansicht auf eine Spanneinrichtung, bei der diese mit einem Haltering betätigt wird,
- Fig. 17: einen Querschnitt gegenüber einer der Fig. 8 modifizierten Vorrichtung zum Befestigen einer Rohreinheit, bei der Distanzringe in einem schrägen Winkel zum manschettenartigen Element angeordnet sind,
- Fig. 18: eine perspektivische Ansicht auf eine gegenüber der Fig. 1 modifizierte Vorrichtung unter Verwendung der Doppelgelenkschnalle,
- Fig. 19: eine Ansicht auf die Doppelgelenkschnalle bei der Vorrichtung gemäß Fig. 18 und
- Fig. 20: einen Schnitt durch die Doppelgelenkschnalle gemäß Fig. 19.

Gleiche Bauteile bzw. Bauteile mit gleicher Funktion sind in den Figuren mit den gleichen Bezugsziffern versehen.

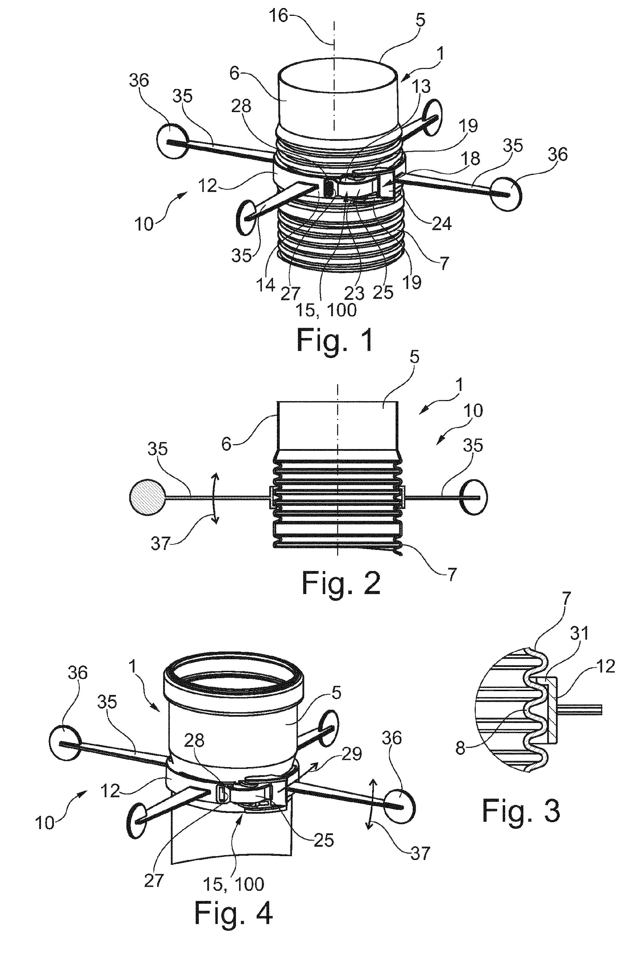

In den Fig. 1 bis 3 ist eine nicht von der Erfindung umfasste Vorrichtung 10 zum zeitweiligen Befestigen einer Rohreinheit 1 dargestellt. Die Rohreinheit 1 besteht dabei in der Praxis aus wenigstens zwei miteinander koaxial in Längsrichtung miteinander verbundenen Rohrelementen 5, von denen in der Fig. 1 lediglich ein einziges Rohrelement 5 dargestellt ist. Die Verbindung der Rohrelemente 5 erfolgt auf an sich bekannte und nicht erfindungswesentliche Art und Weise und ist daher nicht dargestellt. Das Rohrelement 5 weist einen ersten Wandabschnitt 6 auf, dessen Außenwand eben bzw. glatt ausgebildet ist, während ein sich an den ersten Wandabschnitt 6 anschließender zweiter Wandabschnitt 7 eine gewellte Wand aufweist, so dass das Rohrelement 5 im Bereich des zweiten Wandabschnitts 7 verformbar ist, um sich beispielsweise dem Verlauf eines Schachtes anpassen zu können, ohne dass dazu zusätzliche Verbindungselemente zwischen den einzelnen Rohrelementen 5 erforderlich sind. Wie insbesondere anhand der Fig. 3 erkennbar ist, bildet ein derartiger zweiter, in Form eines Wellrohrs ausgebildeter Wandabschnitt 7 nach innen ragende Wandbereiche 8 aus.

Die Vorrichtung 10 umfasst ein manschettenartiges Element 12 mit einem im Wesentlichen rechteckförmigen Querschnitt. Das Element 12, das insbesondere als Spritzgussteil hergestellt ist und aus Kunststoff besteht, weist eine runde Grundform auf bzw. eine Grundform, deren Innenweite und -form der Form bzw. dem Durchmesser des Rohrelements 5 angepasst ist. Die radial umlaufende Wand des Elements 12 ist an einer Stelle längsgeschlitzt ausgebildet, so dass zwei gegenüberliegende Endbereiche 13, 14 am Element 12 ausgebildet werden. Die beiden Endbereiche 13, 14 dienen der Ausbildung bzw. Anordnung einer als Klemmschnallenverbindung 15 ausgebildeten Spanneinrichtung 100, die ebenfalls (vollständig) aus Kunststoff ausgebildet ist, und vorzugsweise aus demselben Kunststoff wie das manschettenartige Element 12 besteht.

Die Klemmschnallenverbindung 15 weist einen an dem ersten Endbereich 13 befestigten, in einer parallel zur Längsachse 16 der Vorrichtung 10 bzw. senkrecht zur Haupterstreckungsrichtung des Elements 12 verlaufenden Drehachse schwenkbaren Bügel 18 auf, der zwei parallel zueinander angeordnete Rippen 19 umfasst, an deren jeweils einem Ende ein Zapfen 21 angeformt ist, der in jeweils eine Ausnehmung in Form eines Durchbruchs 22 eingreift. Der Durchbruch 22 ist an einem flanschartig umgebogenen Bereich 23 ausgebildet, der an den beiden Stirnseiten des manschettenartigen Elements 12 einstückig angeformt ist, wie dies insbesondere anhand der Fig. 11 erkennbar ist. Die beiden Rippen 19 sind auf der dem Zapfen 21 gegenüberliegenden Seite mit einer Griffplatte 24 miteinander verbunden, die in der in der Fig. 1 dargestellten Verriegelungsstellung der Vorrichtung 10 schräg zum Umfang des manschettenartigen Elements 12 angeordnet ist, derart, dass die Griffplatte 24 in der Verriegelungsstellung der Klemmschnallenverbindung 15 von dem manschettenartigen Element 12 absteht, so dass diese von beiden Seiten von einem Bediener bzw. Monteur gegriffen werden kann.

Die als Hebel wirkende Griffplatte 24 ist mit einem Halteabschnitt 25 vorzugsweise einstückig verbunden, der streifenförmig ausgebildet ist, und der auf der der Griffplatte 24 gegenüberliegenden Seite eine im Ausführungsbeispiel in etwa rechteckförmige Ausnehmung in Form eines Durchbruchs 27 aufweist. Der Durchbruch 27 wirkt zum Herstellen der Verriegelungsstellung der Klemmschnallenverbindung 15 mit einem hakenförmigen Fortsatz 28 zusammen, der an dem dem ersten Endbereich 13 gegenüberliegenden zweiten Endbereich 14 des Elements 12 angeordnet ist, vorzugsweise durch eine einstückig an dem zweiten Endbereich 14 ausgebildete Anformung.

Durch die geometrische Dimensionierung der Griffplatte 24 sowie dem Ort der Befestigung des Halteabschnitts 25 an der Griffplatte 24 wird ein Hebelmechanismus ausgebildet, der eine Betätigungskraft des Bedieners an der Griffplatte in eine erhöhte Spannkraft an der Vorrichtung 10 übersetzt.

Vorzugsweise ist der Querschnitt des manschettenartigen Elements 12 bzw. der Abstand zwischen den beiden Endbereichen 13, 14 derart ausgebildet, dass zum Umschließen der Rohreinheit 1 bzw. des Rohrelements 5 das manschettenartige Element 12 derart aufgeweitet werden kann, dass das Rohrelement 5 zwischen den beiden Endbereichen 13, 14 des Elements 12 eingeführt werden kann. Zum Ausbilden der in den Fig. 1 bis 3 dargestellten Verriegelungsstellung der Vorrichtung 10 ist es lediglich erforderlich, den Durchbruch 27 des Halteabschnitts 25 der Klemmschnallenverbindung 15 mit dem Fortsatz 28 in Wirkverbindung zu bringen, und anschließend die Griffplatte 24 in Richtung des Pfeils 29 zu verschwenken. Die Ausbildung der Klemmschnallenverbindung 15 bzw. des Bügels 18 ist dabei derart, dass in der Verriegelungsstellung der Vorrichtung 10 eine Selbstsicherung des Bügels 18 stattfindet, d.h., dass zum Lösen der Klemmschnallenverbindung 15 eine Lösekraft entgegen der Richtung des Pfeils 29 aufgebracht werden muss.

Die axiale Sicherung bzw. Fixierung des Rohrelements 5 innerhalb des manschettenartigen Elements 12 erfolgt mittels an den beiden Stirnseiten des Elements 12 radial nach innen ragender Halteabschnitte 31, 32. Wie besonders deutlich anhand der Fig. 7 erkennbar ist, sind dabei bevorzugt jeweils mehrere Halteanschnitte 31, 32, im Ausführungsbeispiel jeweils vier Halteabschnitte 31, 32 vorgesehen, die in gleichmäßigen Winkelabständen zueinander angeordnet sind. Die flanschartig nach innen ragenden Halteabschnitte 31, 32 sind dabei segmentartig ausgebildet, so dass zwischen den einzelnen Halteabschnitten 31, 32 jeweils ein Freiraum ausgebildet ist.

Wie man ferner anhand der Fig. 7 erkennt, sind die einen Halteabschnitte 31 radial winkelversetzt zu den anderen Haltebereichen 32 angeordnet, derart, dass in Längsrichtung der Vorrichtung 10 Freiräume 38 ausgebildet werden, die über die gesamte Höhe des manschettenartigen Elements 12 verlaufen, wie dies anhand der Fig. 8 erkennbar ist. Die axiale Fixierung des Rohrelements 5 mittels der Halteabschnitte 31, 32 erfolgt entsprechend den Fig. 2 und 3 dadurch, dass die Halteabschnitte 31 bzw. 32 in die radial nach innen stehenden Wandbereiche 8 des Rohrelements 5 eingreifen und dadurch einen Formschluss zwischen dem gewellt ausgebildeten zweiten Wandabschnitt 7 des Rohrelements 5 und den Halteabschnitten 31, 32 ausbilden.

Um die Vorrichtung 10 bzw. die Rohreinheit 1 innerhalb beispielsweise eines Schachtes zentrieren bzw. beabstandet zu den Wänden des Schachtes anordnen zu können, weist die Vorrichtung 10 darüber hinaus beispielhaft vier, in gleichmäßigen Winkelabständen zueinander angeordnete, radial abragende Organe in Form von Haltearmen 35 auf. Die Haltearme 35 sind einstückig an dem manschettenartigen Element 12 an dessen Außenumfang angeformt und weisen beispielhaft einen rechteckigen Querschnitt auf, der sich radial nach außen verringert. An dem dem manschettenartigen Element 12 abgewandten Ende trägt jeder der Haltearme 35 eine Klemmscheibe 36. Durch die Anordnung bzw. Ausbildung der Haltearme 35 sind diese in Richtung des Doppelpfeils 37 schwenkbar an dem manschettenartigen Element 12 angeordnet, sodass sich beim Einführen bzw. Einschieben der Vorrichtung 10 in einen Öffnungsquerschnitt beispielsweise eines Schachtes die Haltearme 35 der Querschnittsform des Schachtes anpassen können bzw. sich der radiale Abstand der Klemmscheiben 36 zum Element 12 verändert.

Die Fig. 4 bis 6 zeigen die Vorrichtung 10 im Zusammenhang mit einer Rohreinheit 1, die aus Rohrelementen 5a besteht. Das Rohrelement 5a unterscheidet sich von dem Rohrelement 5 dadurch, dass es keinen im Querschnitt gewellt ausgebildeten zweiten Wandabschnitt 7 aufweist. Stattdessen ist ein zweiter Wandabschnitt 7a vorgesehen, der eine Einschnürung 9 in Form einer Sicke o.ä. ausbildet, in die zur axialen Festsetzung des Rohrelements 5a mittels der Vorrichtung 10 die Halteabschnitte 31, 32 eingreifen, wie dies insbesondere anhand der Fig. 5 und 6 erkennbar ist.

In den Fig. 7 bis 11 ist eine modifizierte, ebenfalls nicht von der Erfindung umfasste Vorrichtung 10a dargestellt, die sich von der Vorrichtung 10 gemäß den Fig. 1 bis 6 dadurch unterscheidet, dass anstelle von Haltearmen 35 Halteringe 40 vorgesehen sind. Die Halteringe 40 bestehen bevorzugt ebenfalls aus Kunststoff und sind als von dem manschettenartigen Element 12 separate Bauteile ausgebildet und mit diesem beispielsweise über eine nicht näher dargestellte formschlüssige Rastverbindung verbunden, indem beispielsweise ein an einem Haltering 40 angeformter Zapfen formschlüssig in eine entsprechende Öffnung in dem manschettenartigen Element 12 eingreift und dabei den Haltering 40 in einer definierten Position arretiert. Insbesondere ist es vorgesehen, wie insbesondere anhand einer Zusammenschau der Fig. 7 und 8 erkennbar ist, dass die Längsachsen 41 der Halteringe 40 um 90° zur Längsachse 42 des manschettenartigen Elements 12 verlaufen. Weiterhin ist insbesondere anhand der Fig. 9 erkennbar, dass die Halteringe 40 einen im Wesentlichen rechteckigen Querschnitt aufweisen, von dem an der Außenseite ein umlaufender Steg 43 hervorsteht. Durch die um 90° gegenüber dem manschettenartigen Element 12 verschwenkte Anordnung der Halteringe 40 sind diese in ihrem Querschnitt elastisch verformbar ausgebildet, so dass sich diese, in Analogie zu den Haltearmen 35, nahezu beliebigen Querschnitten (eines Schachtes) anpassen, in denen die Vorrichtung 10 mitsamt der Rohreinheit 1 angeordnet ist.

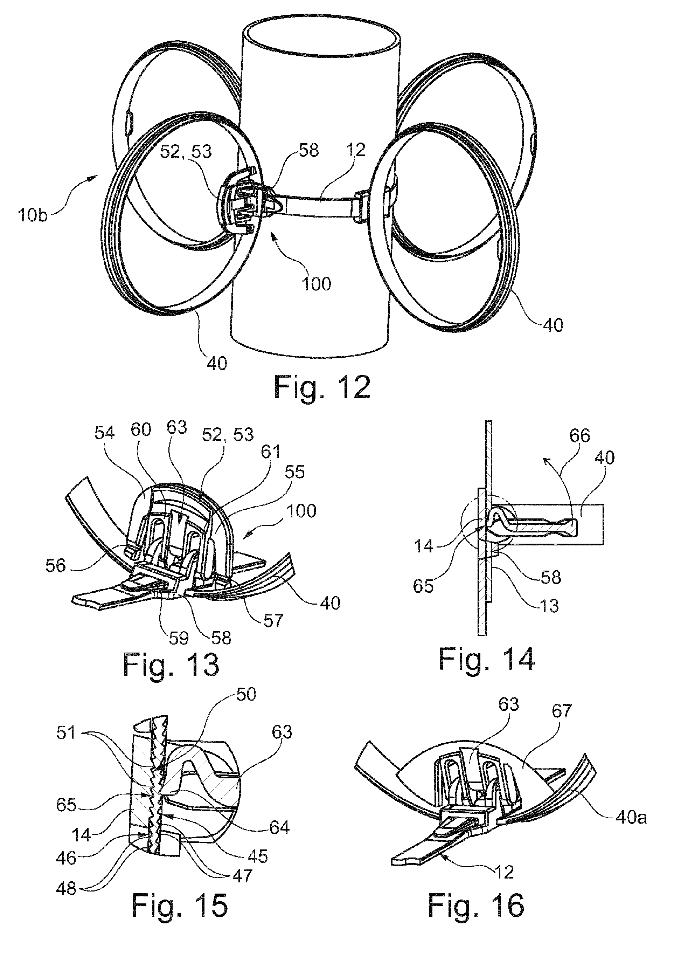

In den Fig. 12 bis 15 ist eine erfindungsgemäße Vorrichtung 10b dargestellt, die sich von den Vorrichtungen 10a, 10b durch eine andersartig ausgestaltete Spanneinrichtung 100 auszeichnet. Hierzu weist die Spanneinrichtung 100 an dem einen Endbereich 13 des manschettenartigen Elements 12, wie insbesondere in den Fig. 14 und 15 erkennbar ist, auf gegenüberliegenden Seiten eine erste bzw. zweite Verzahnungsgeometrie 45, 46 auf. Die beiden Verzahnungsgeometrien 45, 46 weisen im Querschnitt keilförmig ausgebildete Zähne 47, 48 auf. Der Endbereich 13 kann über den anderen Endbereich 14 des manschettenartigen Elements 12 übergeschoben werden, wobei der andere Endbereich 14 eine Gegenverzahnung 50 mit Zähnen 51 aufweist, die mit der zweiten Verzahnungsgeometrie 46 zusammenwirkt. Die erste Verzahnungsgeometrie 45 wirkt mit einer als Hebel wirkenden Betätigungsplatte 52 zusammen, die als Betätigungselement 53 ausgebildet ist. Die Betätigungsplatte 52 ist im Bereich eines Halterings 40 angeordnet, wobei zwei seitlich an der Betätigungsplatte 52 angeordnete, abragende Haltearme 54, 55 über Scharnierbereiche 56, 57 einstückig mit dem Haltering 40 verbunden sind. Die Schwenkachse der Betätigungsplatte 52 verläuft somit senkrecht zur Haupterstreckungsrichtung des Elements 12. Der ortsfest am Element 12 angeordnete Haltering 40 weist einen Mittelbereich 58 mit einer Durchgangsöffnung 59 auf, durch die der erste Endbereich 13 des manschettenartigen Elements 12 hindurchgeschoben werden kann. Zusätzlich dient der Mittelbereich 58 der zusätzlichen, schwenkbaren Befestigung der Betätigungsplatte 52 mittels zweier U-förmiger Arme 60, 61. Die anderen Halteringe 40 können zur besseren Anpassbarkeit der Vorrichtung 10b entlang des Umfangs des Elements 12 verschiebbar angeordnet sein.

Zwischen den beiden Armen 60, 61 ist ein zungenartiger Abschnitt 63 der Betätigungsplatte 52 angeordnet, dessen der ersten Verzahnungsgeometrie 45 zugewandtes Ende hakenförmig gekrümmt ausgebildet ist und mit einer Spitze 64 mit der ersten Verzahnungsgeometrie 45 zusammenwirkt. Wesentlich dabei ist, dass die erste Verzahnungsgeometrie 45 zusammen mit der Spitze 64 in Art einer Ratschenverbindung zusammenwirkt.

Die soweit beschriebene Vorrichtung 10b arbeitet wie folgt: Nachdem der erste Endbereich 13 durch die Durchgangsöffnung 59 des Mittelbereichs 58 hindurchgeschoben wurde, wirkt die zweite Verzahnungsgeometrie 46 mit der Gegenverzahnung 50 in Form einer Rastverbindung 65 zusammen. Gleichzeitig ist die Spitze 64 des zungenartigen Abschnitts 63 in Wirkverbindung mit der ersten Verzahnungsgeometrie 45 angeordnet. Wird nun die Betätigungsplatte 52 in Richtung des Pfeils 66 geschwenkt, so nimmt der zungenartige Abschnitt 63 bzw. die Spitze 64 den ersten Endbereich 13 unter Verstärkung der Betätigungskraft des Bedieners mit und schiebt dabei die zweite Verzahnungsgeometrie 64 derart über die Gegenverzahnung 50, dass sich der Umfang des manschettenartigen Elements 12 verringert, d.h. das Element 12 gespannt wird. Wird nun die Betätigungsplatte 52 entgegen der Richtung des Pfeils 66 zurückgeschwenkt, so gleitet die Spitze 64 des zungenartigen Abschnitts 63 aufgrund der ratschenartigen Ausbildung über die Zähne 48 der ersten Verzahnungsgeometrie 45 hinweg, ohne dabei den Endbereich 13 mitzunehmen. Vielmehr ändert sich die Position der beiden Endabschnitte 13, 14 aufgrund der Geometrie der zweiten Verzahnungsgeometrie 46 sowie der Gegenverzahnung 50 nicht.

Ergänzend wird erwähnt, dass anstelle einer separaten Betätigungsplatte 52 als Betätigungselement 53 auch der Haltering 40 selbst als Betätigungselement 53 dienen kann. Im einfachsten Fall kann dies dadurch geschehen, dass entsprechend der Fig. 16 ein den Abschnitt 63 tragender Verbindungsabschnitt 67 starr am Haltering 40a angeordnet ist, so dass bei einem Schwenken des Halterings 40a der Verbindungsabschnitt 67 und somit auch der Abschnitt 63 der Schwenkbewegung folgt.

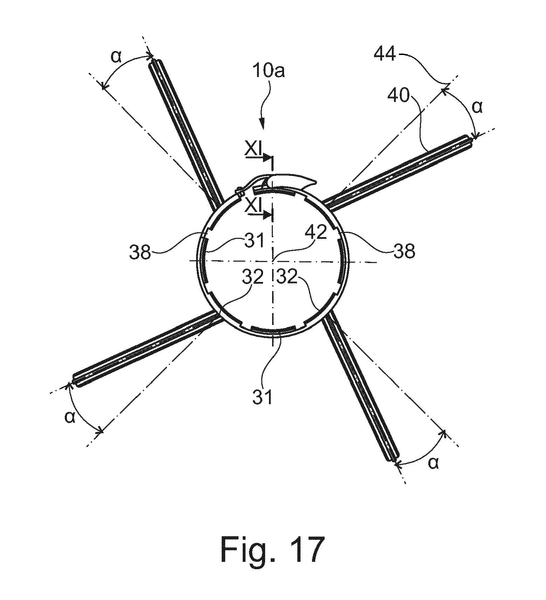

In der Fig. 17 ist eine modifizierte Vorrichtung 10 dargestellt, bei der die Klemmringe 40b um einen Winkel α in Bezug zu einer an Befestigungsort der Klemmringe 40b an dem manschettenartigen Element 12 angeordneten, die Längsachse 42 schneidenden Geraden 44 geschwenkt sind. Wesentlich dabei ist, dass die Klemmringe 40b, zusammen mit dem Element 12 als einteiliges Bauteil als Spritzgußteil ausgebildet sind. Darüber hinaus hat es sich als vorteilhaft erwiesen, wenn Winkel α zwischen 5° und 45°, bevorzugt zwischen 10° und 30°, ganz besonders bevorzugt zwischen 15° und 20° beträgt.

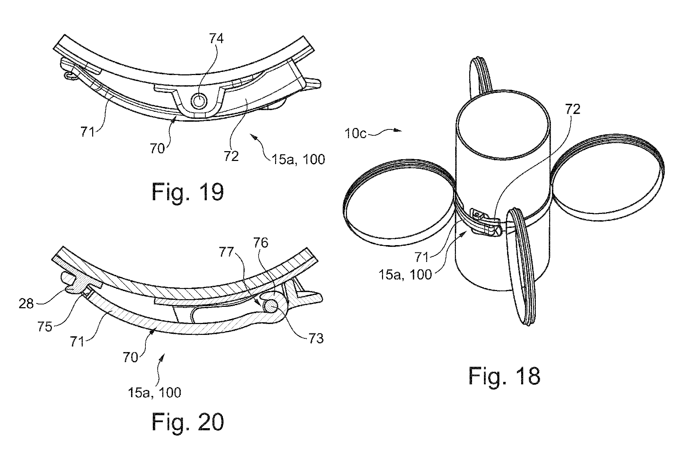

In den Fig. 18 bis 20 ist eine gegenüber der in der Fig. 1 dargestellten Vorrichtung 10 modifizierte, nicht von der Erfindung umfasste Vorrichtung 10c dargestellt, die sich durch die Verwendung einer Spanneinrichtung 100 mit einer Klemmschnallenverbindung 15a auszeichnet, die als Doppelgelenkschnalle 70 ausgebildet ist. Die Doppelgelenkschnalle 70 umfasst einen vorzugsweise aus Kunststoff bestehenden Haltebügel 71, der mit einem Spannbügel 72 im Bereich einer Achse 73 des Spannbügels 72 gelenkig verbunden ist. Der Spannbügel 72 ist wiederum auf der der Achse 73 abgewandten Seite in einer zur Achse 73 parallelen Achse 74 gelenkig angeordnet. Die Achse 74 ist am einen Endbereich des manschettenartigen Elements 12 angeordnet. Der Haltebügel 71 weist einen Durchbruch 75 auf, der zum Spannen der Klemmschnallenverbindung 15a in den Fortsatz 28 eingreift. Durch eine Variation der Länge des Spannbügels 72 lässt sich die Öffnungsweite der Spanneinrichtung 100 zum Ein- bzw. Durchführen des Rohrelements 5 bzw. die erforderliche Betätigungskraft zum Schließen der Spanneinrichtung 100 beeinflussen. Der Haltebügel 71 weist einen die Achse 73 umgreifenden Halteabschnitt 76 auf, dessen Öffnung 77 eine Öffnungsweite bzw. einen Öffnungsspalt aufweist, die bzw. der geringer ist als der Durchmesser der Achse 73. Dadurch bildet der Haltebügel 71 bzw. der Halteabschnitt 76 mit der Achse 73 eine Rastverbindung aus, bei der der Halteabschnitt 76 die Achse 73 umgreift.

Die soweit beschriebene erfindungsgemäße Vorrichtung 10b kann in vielfältiger Art und Weise abgewandelt bzw. modifiziert werden, ohne vom Erfindungsgedanken abzuweichen.

### Bezugszeichenliste

- 1: Rohreinheit
- 5/a: Rohrelement
- 6: erster Wandabschnitt
- 7/a: zweiter Wandabschnitt
- 8: Wandbereich
- 9: Einschnürung
- 10/a/b/c: Vorrichtung
- 12: manschettenartiges Element
- 13: Endbereich
- 14: Endbereich
- 15/a: Klemmschnallenverbindung
- 16: Längsachse
- 18: Bügel
- 19: Rippe
- 21: Zapfen
- 22: Durchbruch
- 23: umgebogener Bereich
- 24: Griffplatte
- 25: Halteabschnitt
- 27: Durchbruch
- 28: Fortsatz
- 29: Pfeil
- 31: Halteabschnitt
- 32: Halteabschnitt
- 35: Haltearm
- 36: Klemmscheibe
- 37: Doppelpfeil
- 38: Freiraum
- 40/a/b: Haltering
- 41: Längsachse
- 42: Längsachse
- 43: Steg
- 44: Gerade
- 45: Verzahnungsgeometrie
- 46: Verzahnungsgeometrie
- 47: Zahn
- 48: Zahn
- 50: Gegenverzahnung
- 51: Zahn
- 52: Betätigungsplatte
- 53: Betätigungselement
- 54: Haltearm
- 55: Haltearm
- 56: Scharnierbereich
- 57: Scharnierbereich
- 58: Mittelbereich
- 59: Durchgangsöffnung
- 60: Arm
- 61: Arm
- 63: zungenartiger Abschnitt
- 64: Spitze
- 65: Rastverbindung
- 66: Pfeil
- 67: Verbindungsabschnitt
- 70: Doppelgelenkschnalle
- 71: Haltebügel
- 72: Spannbügel
- 73: Achse
- 74: Achse
- 75: Durchbruch
- 76: Halteabschnitt
- 77: Öffnung

- 100: Spanneinrichtung

- α: Winkel

## Patentansprüche

1. Vorrichtung (10b) zum zeitweiligen Befestigen einer Rohreinheit (1), insbesondere einer aus wenigstens zwei miteinander koaxial verbundenen Rohrelementen (5; 5a) bestehenden Rohreinheit (1), wobei die Rohreinheit (1) von einem manschettenartigen Element (12) umfasst und dieses mit zumindest einem von diesem radial abragenden Organ (35; 40; 40a; 40b) versehen ist, wobei das manschettenartige Element (12) umfangsseitig zwei in einer Verriegelungsstellung in Wirkverbindung miteinander verbundene Endbereiche (13, 14) aufweist, die zusammen zum Fixieren der Rohreinheit (1) in der Verriegelungsstellung einen Klemm- oder Formschluss mit der Rohreinheit (1) ausbilden, wobei die beiden Endbereiche (13, 14) mit einer eine manuelle Betätigungskraft kraftverstärkenden Spanneinrichtung (100) verbunden sind, und wobei die Spanneinrichtung (100) ein werkzeuglos und manuell betätigbares, hebelförmiges Betätigungselement (53) zum Spannen der Spanneinrichtung (100) aufweist,
**dadurch gekennzeichnet,**
**dass** die Spanneinrichtung (100) zum Ausbilden einer Rastverbindung (65) zwischen den Endbereichen (13, 14) des manschettenartigen Elements (12) dient, wobei das Betätigungselement (53) in Wirkverbindung mit einer an einem Endbereich (13) des manschettenartigen Elements (12) ausgebildeten ersten Verzahnungsgeometrie (45) zusammenwirkt.

2. Vorrichtung nach Anspruch 1,
**dadurch gekennzeichnet,**
**dass** das Betätigungselement (53) einen mit der ersten Verzahnungsgeometrie (45) zusammenwirkenden Abschnitt (63) aufweist, der mit der ersten Verzahnungsgeometrie (45) in Art einer Ratsche zusammenwirkt, sodass bei einer Bewegung des Betätigungselements (53) in die eine Richtung sich der Umfang des manschettenartigen Elements (12) verringert und bei einer Bewegung des Betätigungselements (53) in die andere Richtung das manschettenartige Element (53) seinen Umfang beibehält.

3. Vorrichtung nach Anspruch 1 oder 2,
**dadurch gekennzeichnet,**
**dass** der die erste Verzahnungsgeometrie (45) aufweisende Endabschnitt (13) auf der der ersten Verzahnungsgeometrie (45) gegenüberliegenden Seite eine zweite Verzahnungsgeometrie (46) aufweist, die mit einer Gegenverzahnung (50) an dem anderen Endabschnitt (14) des manschettenartigen Elements (12) zusammenwirkt.

4. Vorrichtung nach einem der Ansprüche 1 bis 3,
**dadurch gekennzeichnet,**
**dass** das Betätigungselement (53) in Form einer hin- und herschwenkbaren Betätigungsplatte (52) ausgebildet ist.

5. Vorrichtung nach Anspruch 4,
**dadurch gekennzeichnet,**
**dass** die Betätigungsplatte (52) im Bereich eines Organs (40) angeordnet und schwenkbar an diesem befestigt ist.

6. Vorrichtung nach Anspruch 4,
**dadurch gekennzeichnet,**
**dass** das Betätigungselement (53) durch ein Organ (40a) gebildet ist, das über einen Verbindungsabschnitt (67) mit dem manschettenartigen Element (12) verbunden ist.

7. Vorrichtung nach einem der Ansprüche 1 bis 6,
**dadurch gekennzeichnet,**
**dass** mehrere, vorzugsweise vier, in gleichmäßigen Winkelabständen zueinander angeordnete, radial abstehende Organe (35; 40; 40a; 40b) vorgesehen sind, und dass die Organe in Längsrichtung der Vorrichtung betrachtet radial elastisch verformbar ausgebildet sind.

8. Vorrichtung nach Anspruch 7,
**dadurch gekennzeichnet,**
**dass** die abstehenden Organe als Klemmringe (40; 40a) ausgebildet sind, deren Längsachsen (41) senkrecht zur Längsachse (42) des manschettenartigen Elements (12) verlaufen, und dass die Klemmringe (40) als separate Bauteile ausgebildet sind, die über eine formschlüssig ausgebildete Rastverbindung mit dem manschettenartigen Element (12) verbunden sind.

9. Vorrichtung nach Anspruch 7,
**dadurch gekennzeichnet,**
**dass** die abstehenden Organe als Klemmringe (40b) ausgebildet sind, die um einen Winkel (α) in Bezug zu einer an Befestigungsort der Klemmringe (40b) an dem Element (12) angeordneten, die Längsachse (42) schneidenden Geraden (44) geschwenkt sind, und dass die Klemmringe (40b), zusammen mit dem Element (12) als einteiliges Bauteil als Spritzgußteil ausgebildet sind.

10. Vorrichtung nach Anspruch 9,
**dadurch gekennzeichnet**,
der Winkel (α) zwischen 5° und 45°, bevorzugt zwischen 10° und 30°, ganz besonders bevorzugt zwischen 15 ° und 20 ° beträgt.

11. Vorrichtung nach einem der Ansprüche 1 bis 10,
**dadurch gekennzeichnet,**
**dass** das manschettenartige Element (12) eine radial umlaufende Wand aufweist, und dass von der Wand wenigstens ein radial nach innen ragender Halteabschnitt (31, 32) ausgeht, der in der Verriegelungsstellung der Klemmschnallenverbindung (15) mit der Rohreinheit (1) eine formschlüssige, die Rohreinheit (19 in Axialrichtung fixierende Verbindung ausbildet.

12. Vorrichtung nach Anspruch 11,
**dadurch gekennzeichnet,**
**dass** im Bereich beider Stirnseiten des manschettenartigen Elements (12) mehrere, vorzugsweise in gleichgroßen Winkelabständen zueinander angeordnete, teilsegmentartige Halteabschnitte (31, 32) vorgesehen sind, die jeweils flanschartig ausgebildet sind, und dass die Halteabschnitte (31, 32) an den beiden Stirnseiten radial versetzt zueinander angeordnet sind.

13. Vorrichtung nach Anspruch 12,
**dadurch gekennzeichnet,**
**dass** in Längsrichtung des manschettenartigen Elements (12) betrachtet halteabschnittfreie Bereiche (38) ausgebildet sind, die über die gesamte Längserstreckung des manschettenartigen Elements (12) verlaufen.

14. Vorrichtung nach einem der Ansprüche 1 bis 13,
**dadurch gekennzeichnet,**
**dass** das manschettenartige Element (12) und die Spanneinrichtung (100) vollständig aus Kunststoff bestehen.

## Claims

1. Device (10b) for the temporary fastening of a pipe unit (1), more a particularly a pipe unit (1) comprising at least two pipe elements (5; 5a) which are coaxially connected to each other, wherein the pipe unit (1) is surrounded by a cuff-like element (12), the latter being provided with at least one organ (35; 40; 40a; 40b) radially projecting therefrom, wherein circumferentially the cuff-like element (12) has two end sections (13, 14) which actively engage with each other in a locking position and together bring about a clamped or positive form lock with the pipe unit (1) for fixing the pipe unit (1) in the locking position, wherein both end sections (13, 14) are in connection with a tightening device (100) that amplifies a manual operating force, and wherein the tightening device (100) has a tool-free, manually operated, lever-like operating element (53) for tightening the tightening device (100),
**characterised in that**
the tightening device (100) serves to form a snap-type connection (65) between the end areas (13, 14) of the cuff-like element (12), wherein the operating element (53) actively engages with a first toothed geometry (45) arranged on an end section (13) of the cuff-like element (12).

2. Device according to claim 1,
**characterised in that**
the operating element (53) has a section (63) that interacts with the first toothed geometry (45) in the form of a ratchet so that on moving the operating element (53) in one direction the circumference of the cuff-like element (12) decreases and on moving the operating element (53) in the other direction the circumference of the cuff-like element (12) is retained.

3. Device according to claim 1 or 2,
**characterised in that**
on the side opposite the first toothed geometry (45), the end section (13) having the first toothed geometry (45) has a second toothed geometry (46) which interacts with counter-toothing (50) on the other end section (14) of the cuff-like element (12).

4. Device according to any one of claims 1 to 3,
**characterised in that**
the operating element (53) is designed in the form of an operating plate (52) that can be pivoted back and forth.

5. Device according to claim 4,
**characterised in that**
the operating plate (52) is arranged in the region of an organ (40) and is attached thereto in a pivoting manner.

6. Device according to claim 4,
**characterised in that**
the operating element (53) is formed by an organ (40a) that is connected to the cuff-like element (12) via a connection section (67).

7. Device according to any one of claims 1 to 6,
**characterised in that**
several, preferably four, radially projecting organs (35; 40; 40a; 40b) are provided, arranged at regular angular distances with regard to each other, and that seen in the longitudinal direction of the device the organs are radially elastically deformable.

8. Device according to claim 7,
**characterised in that**
the projecting organs are designed a clamping rings (40; 40a), the longitudinal axes (41) of which run perpendicularly to longitudinal axis (42) of the cuff-like element (12), and **in that** the clamping rings (40) are designed as separate components which are connected to the cuff-like element (12) via an interlocking snap-type connection.

9. Device according to claim 7,
**characterised in that**
the projecting organs are designed as clamping rings (40b) which are pivoted about an angle (α) in relation to a straight line (44) arranged at a fastening location of the clamping rings (40b) on the element (12) intersecting the longitudinal axis (42), and **in that** the clamping rings (40b) together with the element (12) are produced as a one-piece injection moulded part.

10. Device according to claim 9,
**characterised in that**
the angle (α) is between 5° and 45°, preferably between 10° and 30°, very particularly preferably between 15° and 20°.

11. Device according to any one of claims 1 to 10,
**characterised in that**
the cuff-like element (12) has a radially circumferential wall, and that from the wall at least one holding section (31, 32) projects inwards and in the locking position of the clamping buckle connection (15) with the pipe unit (1) forms an interlocking connection which fastens the pipe unit (19) in the axial direction.

12. Device according to claim 11,
**characterised in that**
in the region of both faces of the cuff-like element (12), several partial segment-like holding sections (31, 32) are provided, preferably arranged at equal angular distances with regard to each other and each designed in a flange-like manner, and **in that** the holding sections (31, 32) are arranged on both faces radially offset with regard to each other.

13. Device according to claim 12,
**characterised in that**
seen in the longitudinal direction of the cuff-like element (12) there are holding section-free areas (38) which run over the longitudinal extent of the cuff-like element (12).

14. Device according to any one of claims 1 to 13,
**characterised in that**
the cuff-like element (12) and the tightening device (100) are completely made of plastic.

## Revendications

1. Dispositif (10b) pour la fixation temporaire d'une unité de tube (1), en particulier d'une unité de tube (1) constituée d'au moins deux éléments de tube (5 ; 5a) connectés coaxialement l'un à l'autre, l'unité de tube (1) comprenant un élément de type manchette (12) et celui-ci étant pourvu d'au moins un organe (35 ; 40 ; 40a ; 40b) faisant saillie radialement depuis celui-ci, l'élément de type manchette (12) présentant, du côté de la périphérie, deux régions d'extrémité (13, 14) connectées l'une à l'autre en liaison fonctionnelle dans une position de verrouillage, lesquelles constituent ensemble, pour la fixation de l'unité de tube (1) dans la position de verrouillage, un engagement par serrage ou par correspondance de forme avec l'unité de tube (1), les deux régions d'extrémité (13, 14) étant connectées à un dispositif de serrage (100) amplifiant la force d'une force d'actionnement manuelle, et le dispositif de serrage (100) présentant un élément d'actionnement en forme de levier (53), pouvant être actionné sans outil et manuellement pour le serrage du dispositif de serrage (100),
**caractérisé en ce que**
le dispositif de serrage (100) sert à réaliser une connexion par encliquetage (65) entre les régions d'extrémité (13, 14) de l'élément de type manchette (12), l'élément d'actionnement (53) coopérant en liaison fonctionnelle avec une première géométrie de denture (45) réalisée au niveau d'une région d'extrémité (13) de l'élément de type manchette (12).

2. Dispositif selon la revendication 1,
**caractérisé en ce que**
l'élément d'actionnement (53) présente une portion (63) coopérant avec la première géométrie de denture (45), laquelle portion coopère avec la première géométrie de denture (45) à la manière d'un cliquet, de sorte que dans le cas d'un déplacement de l'élément d'actionnement (53) dans une direction, la périphérie de l'élément de type manchette (12) diminue, et que dans le cas d'un déplacement de l'élément d'actionnement (53) dans l'autre direction, l'élément de type manchette (12) conserve sa périphérie.

3. Dispositif selon la revendication 1 ou 2, **caractérisé en ce que**
la portion d'extrémité (13) présentant la première géométrie de denture (45) présente, du côté opposé à la première géométrie de denture (45), une deuxième géométrie de denture (46) qui coopère avec une denture conjuguée (50) au niveau de la deuxième portion d'extrémité (14) de l'élément de type manchette (12).

4. Dispositif selon l'une quelconque des revendications 1 à 3,
**caractérisé en ce que**
l'élément d'actionnement (53) est réalisé en forme de plaque d'actionnement (52) pouvant pivoter vers l'avant et vers l'arrière.

5. Dispositif selon la revendication 4,
**caractérisé en ce que**
la plaque d'actionnement (52) est disposée dans la région d'un organe (40) et est fixée sur celui-ci de manière à pouvoir pivoter.

6. Dispositif selon la revendication 4,
**caractérisé en ce que**
l'élément d'actionnement (53) est formé par un organe (40a) qui est connecté par le biais d'une portion de connexion (67) à l'élément de type manchette (12).

7. Dispositif selon l'une quelconque des revendications 1 à 6,
**caractérisé en ce que**
plusieurs, de préférence quatre organes (35 ; 40 ; 40a ; 40b) faisant saillie radialement, disposés à intervalles angulaires réguliers les uns par rapport aux autres, sont prévus, et **en ce que** les organes, considérés dans la direction longitudinale du dispositif, sont réalisés de manière déformable élastiquement et radialement.

8. Dispositif selon la revendication 7,
**caractérisé en ce que**
les organes saillants sont réalisés sous forme de bagues de serrage (40 ; 40a), dont les axes longitudinaux (41) s'étendent perpendiculairement à l'axe longitudinal (42) de l'élément de type manchette (12), et **en ce que** les bagues de serrage (40) sont réalisées sous forme de composants séparés, qui sont connectés par le biais d'une connexion par encliquetage réalisée avec engagement par correspondance de forme avec l'élément de type manchette (12).

9. Dispositif selon la revendication 7,
**caractérisé en ce que**
les organes saillants sont réalisés sous forme de bagues de serrage (40b) qui sont pivotées suivant un angle (α) par rapport à une droite (44) coupant l'axe longitudinal (42), disposée au lieu de fixation des bagues de serrage (40b) au niveau de l'élément (12) et **en ce que** les bagues de serrage (40b), conjointement avec l'élément (12), sont réalisées sous forme de composant d'une seule pièce en tant que pièce moulée par injection.

10. Dispositif selon la revendication 9,
**caractérisé en ce que**
l'angle (α) est compris entre 5° et 45°, de préférence entre 10° et 30°, et particulièrement préférablement entre 15° et 20°.

11. Dispositif selon l'une quelconque des revendications 1 à 10,
**caractérisé en ce que**
l'élément de type manchette (12) présente une paroi radialement périphérique, et **en ce qu'**au moins une portion de retenue saillant radialement vers l'intérieur (31, 32) part de la paroi, laquelle portion de retenue constitue, dans la position de verrouillage de la connexion à collier de serrage (15) avec l'unité de tube (1), une connexion par engagement par correspondance de forme, fixant l'unité de tube (1) dans la direction axiale.

12. Dispositif selon la revendication 11,
**caractérisé en ce que**
dans la région des deux côtés frontaux de l'élément de type manchette (12), sont prévues plusieurs portions de retenue (31, 32) de type segments partiels, de préférence disposées les unes par rapport aux autres à intervalles angulaires identiques, lesquelles sont à chaque fois réalisées en forme de brides et **en ce que** les portions de retenue (31, 32) sont disposées de manière décalée radialement les unes par rapport aux autres au niveau des deux côtés frontaux.

13. Dispositif selon la revendication 12,
**caractérisé en ce que**
considéré dans la direction longitudinale de l'élément de type manchette (12), des régions dépourvues de portions de retenue (38) sont réalisées, lesquelles s'étendent sur toute l'étendue longitudinale de l'élément de type manchette (12).

14. Dispositif selon l'une quelconque des revendications 1 à 13,
**caractérisé en ce que**
l'élément de type manchette (12) et le dispositif de serrage (100) se composent entièrement de plastique.
